# EUROPEAN PATENT APPLICATION

(11) **EP 4 717 884 A1**
(43) Date of publication of application: **01.04.2026**
(21) Application number: 24203453.6
(22) Date of filing: 30.09.2024
(51) Int. Cl.: F01D 21/00, G01H 17/00, G01M 15/14, G06F 17/14, G01H 1/00

(54) **SYSTEM AND METHOD FOR DETECTING THE CURRENT STATE OF DAMAGE OF A MACHINE**

(71) Applicant: Siemens Energy Global GmbH & Co. KG, 81739 München (DE)
(72) Inventor: Mihalyovics, Reiner Jan, 10825 Berlin (DE)

(57) **Abstract**

The present invention provides a method for detecting the current state of damage of a machine (10) , comprising acquiring a plurality of first pressure signals from a plurality of first pressure sensors (2), wherein each of the plurality of first pressure sensors (2) is arranged and configured to sense a pressure caused by a first process of the machine, acquiring at least one second pressure signal from at least one second pressure sensor (4), wherein the at least one second pressure sensor (4) is arranged and configured to sense a pressure caused by the first process of the machine and by a second process of the machine, wherein the plurality of first pressure sensors and the at least one second pressure sensor detect a pressure of the machine to be monitored over a time period, wherein the plurality of first pressure signals and the at least one second pressure signal exist in a time domain, transforming the plurality of first pressure signals and the at least one second pressure signal from the time domain into the frequency domain as discrete-time frequency spectra to achieve a plurality of transformed first pressure signals and at least one transformed second pressure signal, subtracting at least one of the plurality of the first averaged pressure signal from the at least one second averaged pressure signal to obtain a subtracted pressure signal providing indication about the second process of the machine, and determining the current status of the machine based on a cepstrum analysis of the subtracted pressure signal. The present invention further comprises a corresponding system for detecting the current state of damage of a machine and a computer readable storage medium.

## Description

### Technical Field

The present invention is directed to a system and method for detecting the current state of damage of a machine. Specifically, the present disclosure is directed to the acquisition and transformation of pressure signals from multiple sensors, averaging and subtracting these signals, and determining the machine's health status through a cepstrum analysis to provide an indication of damage.

### Background

The standard approach for calculating a Compressor Condition Index (CCI), which gives indication about the health of a gas turbine, has involved using coverplate dynamic pressure sensors to monitor the compressor's health. However, these sensors inherently capture combustion noise, which is always present in the data used for CCI calculations. This noise significantly impacts the accuracy of the CCI.

WO 2015090698 A1 describes a method for detecting the current damaged state of a machine.

In recent large gas turbine models, there is significant influence of low-frequency noise spectra from combustion dynamics on the CCI calculations. This noise interference is particularly pronounced when gas turbines operate with different types of fuels, such as oil or natural gas, which produce distinct combustion noise profiles. A particular difficulty arises from the fact that the same spectral region used for monitoring compressor health is also where changes in combustion dynamics are most evident. As a result, the CCI values can appear in two distinct bands when plotted against variables such as Variable Inlet Guide Vane (VIGV) position. This necessitates clear discrimination between the bands to avoid false positives that could lead to unnecessary warnings or trips of the turbine system.

One of the prior art methods to mitigate the impact of combustion noise on the CCI calculation is spectral clipping. This technique involves the exclusion of all spectral content within a certain frequency range, such as between 0 Hz and 1000 Hz, from the CCI calculation process. By omitting this frequency band, the CCI becomes less sensitive to the low-frequency noise associated with combustion dynamics. However, in this way, subtle changes that are indicative of compressor health issues may be ignored, as some relevant acoustic signatures might also lie within the clipped range. The spectral clipping solution is typically applied during processing of dynamic pressure data from the coverplate sensors and other sensors used in CCI evaluations. It represents a compromise that aims to enhance the robustness of the CCI against combustion noise but can reduce the sensitivity and accuracy of the health monitoring system.

The latest large gas turbine models are equipped with J-tube sensors designed to capture the nuances of combustion dynamics. However, these sensors are mostly sensitive to pressure fluctuations from the combustion process and are not attuned to the specific acoustic signatures of e.g. the blades of the compressor, making them unsuitable for CCI evaluations.

The coverplate sensors, traditionally used for both combustion dynamics and CCI calculations, cannot effectively discriminate between the noise from these two sources. As a result, the CCI readings are adversely affected, leading to potential misinterpretations of the compressor's health.

It is therefore a technical problem underlying the present invention to provide a method and system for detecting the current state of damage of a machine that at least partially overcomes the disadvantages of known systems.

### Summary of the Invention

The present invention provides a method for detecting the current state of damage of a machine according to claim 1 and corresponding system for detecting the current state of damage of a machine according to claim 8, which overcome one or more of the above-mentioned problems of the prior art.

A first aspect of the invention provides a method for detecting the current state of damage of a machine, comprising acquiring a plurality of first pressure signals from a plurality of first pressure sensors, wherein each of the plurality of first pressure sensors is arranged and configured to sense a pressure caused by a first process of the machine, acquiring at least one second pressure signal from at least one second pressure sensor, wherein the at least one second pressure sensor is arranged and configured to sense a pressure caused by the first process of the machine and by a second process of the machine, wherein the plurality of first pressure sensors and the at least one second pressure sensor detect a pressure of the machine to be monitored over a time period, wherein the plurality of first pressure signals and the at least one second pressure signal exist in a time domain, transforming the plurality of first pressure signals and the at least one second pressure signal from the time domain into a frequency domain as discrete-time frequency spectra to achieve a plurality of transformed first pressure signals and at least one transformed second pressure signal, subtracting at least one of the plurality of first pressure signal from the at least one the second pressure signal to obtain a subtracted pressure signal providing indication about the second process of the machine, and determining the current status of the machine based on a cepstrum analysis of the subtracted pressure signal.

A second aspect of the invention provides a system for detecting the current state of damage of a machine, comprising a plurality of first pressure sensors arranged and configured to sense a pressure caused by a first process in the machine, at least one second pressure sensor arranged and configured to sense a pressure cause by the first process and by a second process in the machine, wherein the plurality of first pressure sensors and the at least one second sensor are configured to provide respective first and second pressure signals over a time period of the machine to be monitored, wherein the first and second pressure signals exist in the time domain, and a data detection and processing apparatus for detecting the first and second pressure signals, wherein the data detection and processing apparatus comprises: a transformation device for carrying out a transformation of the first and second pressure signals from the time domain into a frequency domain as discrete-time frequency spectra, a spectra processing unit configured to subtract at least one of the plurality of first pressure signals from the at least one second pressure signal to obtain a subtracted pressure signal, and a cepstrum analysis unit configured to generate a cepstrum from the subtracted pressure signal for indicating the current status of damage of the machine.

A fundamental idea of the present invention is to accurately extract and analyze compressor-specific acoustics from the mixed signals captured by the sensors, without the confounding effects of combustion-related noise. This is accomplished through a series of signal processing steps that involve the comparative analysis of data from two distinct types of sensors: a first type of sensors, which are highly sensitive to a first process, and at least one of a second type of sensor, which captures both the first and a second process of the machine.

In the proposed system, typically dynamic pressure signals from both the first and the at least second sensor are first acquired and converted into frequency spectra via a transformation from time to frequency, such as e.g. a Fast Fourier Transform (FFT). The resulting spectra of the first sensors predominantly contain pressure caused from the first process, while the spectra of the second sensor include noise of the first process and the signatures from the second process, indicating a damage of the machine. Such signatures may be acoustic signatures.

The core feature of the invention is the subtraction process, wherein the spectrum of the spectra of the first sensors, which represents the noise profile of the second spectra, is subtracted from the spectrum of the at least second sensor. In case of multiple second sensors, an average of the spectra obtained from the multiple sensor sensors may be calculated before the subtraction. This subtraction process yields a refined spectrum that is largely free of the noise of the first process, isolating the signals of the second process, which gives indication of the damage of the machine. The isolated spectrum is then used in the cepstrum analysis to identify the condition of the machine more accurately by evaluating, e.g. a CCI value. This method is described in more detail in WO 2015090698 A1.

By employing this subtraction method, the invention effectively isolates the health indicators from the noise, thereby solving the problem of inaccurate CCI readings caused by variations, such as fuel-type variations and other disturbances. In this way, spectral clipping of the lower frequency part of the spectrum is not required anymore, so that the lower frequency band can be used to find indications for the health of the machine. The result is a more stable and reliable CCI that can be used for predictive maintenance and health monitoring of machines without the confounding effects of extraneous noise sources.

In a preferred embodiment, the method includes averaging the plurality of transformed first pressure signals and the at least one transformed second pressure signal to obtain a first averaged pressure signal and a second averaged pressure signal. In this case, The second averaged pressure signal is subtracted from the first averaged pressure signal to obtain a subtracted pressure signal providing indication about the second process of the machine In a preferred embodiment of the system, spectra processing unit is configured to average the plurality of first pressure signals and the at least one second pressure signal into an averaged first pressure signal and an averaged second pressure signal and subtract the averaged first pressure signal from the averaged second pressure signal to obtain a subtracted pressure signal. With these embodiments, the accuracy of the damage prediction is strongly increased due to the averaging process, which reduces the influence of possible false measurement readings.

In a preferred embodiment, the machine includes a gas turbine comprising a compressor and a combustor having at least one combustion chamber. In preferred embodiments, the combustor includes a plurality of combustion chambers, for example, arranged in circumferential direction of a combustor having a tubular shape. By specifying that the machine includes these components, the method can be understood to be particularly effective in detecting pressure-related anomalies that are specific to the operation of gas turbines.

In a further embodiment, the first process includes a combustion in a combustion chamber, and the second process includes blade rotations of blades in a compressor of the gas turbine. The first pressure sensors are thus positioned to sense the pressure variations caused by the combustion process within the combustion chamber, for example, by a sensing part of the first sensors. These sensors are configured to capture the dynamic pressure changes that occur as a result of the combustion process, which is a critical aspect of the machine's operation. On the other hand, the second pressure sensors are placed to capture the combined pressure effects of two processes, i.e. the combustion process and the blade rotations in the compressor. By including the combustion process as the first process, the method can effectively monitor and analyze the critical aspects of the combustion chamber's performance. By incorporating the blade rotations in the compressor as the second process, the method can capture the intricate pressure variations caused by the mechanical movements of the blades. A damaged blade provides pressure signatures that are detectable by the at least second pressure sensor. This allows for a more detailed analysis of the compressor's performance and its interaction with the combustion process.

In a further embodiment, the plurality of first pressure sensors includes a J-tube pressure sensor, which is fixed to the combustion chamber, wherein the J-tube sensor has a sensing part arranged to sense the pressure of the combustion chamber. The at least one second pressure sensor is a cover plate pressure sensor, which is arranged on the cover plate of the combustion chamber. Therefore, the J-tube pressure sensor having a sensing part within the combustion chamber provides a robust mechanism for capturing pressure data, particularly in environments where pressure fluctuations are critical indicators of machine performance and potential damage. The cover plate pressure sensor's location on the cover plate further apart from the combustion process allows it to effectively monitor the combined pressure effects of multiple processes within the machine, such as the blade rotations of the compressor and the combustion dynamics in the combustion chamber. The integration of these specific sensors and their placements enhances the method's capability to acquire detailed and accurate pressure signals, thereby improving the accuracy of the prediction of the current state of damage of the gas turbine.

In a further embodiment, the cepstrum analysis provides a compressor condition index, CCI, value about a current health status of the compressor by a summation of inversely Fourier transformed frequencies. The CCI serves as a comprehensive indicator that integrates various frequency components, making it easier to interpret the health status of the compressor. The summation of inversely Fourier transformed frequencies allows for the extraction of meaningful patterns from the complex frequency data, which can be directly correlated to the operational condition of the compressor. By incorporating the CCI, the system can provide a standardized value or a differential value to a previous state for the health of the machine that can help in extending the lifespan of the compressor, reducing downtime, and identify compressor damages at an very early stage.

In a further embodiment, a plurality of second pressure signals is acquired by a plurality of second pressure sensors. This provides a more robust and comprehensive data acquisition mechanism by employing multiple second pressure sensors instead of one single sensor. By placing the plurality of second sensors to mutually different locations in the machine, such as e.g. different cover plates of different combustion chambers, an averaged second pressure signal can provide more reliable information about the first and second process, thus increasing the accuracy of the health status of the machine, such as the blades in the compressor of the gas turbine. Since the combination of signals from the same combustion chamber is most beneficial, the cover plate sensor may be corrected with the signal from the J-tube sensor of the same combustion chamber as well.

In a further embodiment, the cepstrum analysis includes determining actual cepstrum values based on the subtracted pressure signal. This step involves an analysis of the subtracted pressure signal obtained after subtracting the first (averaged) pressure signal from the second (averaged) pressure signal. The cepstrum analysis may further comprise a comparison of a floating average value of past cepstrum values with the currently calculated values.

In a further embodiment, the cepstrum analysis unit is configured to generate an actual cepstrum from the subtracted pressure signal, and compare the actual cepstrum with a reference cepstrum obtained from an undamaged machine. As described above, the comparison establishes a reference for evaluating the current state of the machine. The reference cepstrum values thus serves as a standard, against which the actual cepstrum values are measured, allowing for the identification of deviations that may indicate damage or wear.

A further aspect of the invention refers to a computer-readable storage medium storing program code, the program code comprising instructions that when executed by a processor carry out the method of the second aspect or one of the implementations of the second aspect. According to the output of the program, a maintenance of the machine is conducted.

The above embodiments and further developments can be combined with each other as desired, if useful. In particular, all features of the method for detecting the current state of damage of a machine are transferable to the system for detecting the current state of damage of a machine, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### Brief Description of the Drawings

- Figure 1: a flow diagram of a method for detecting the current state of damage of a machine according to an embodiment of the invention;
- Figure 2: a highly schematically block diagram of a machine with an integrated system for detecting the current state of damage of a machine according to an embodiment of the invention;
- Figure 3: a schematic block diagram of a gas turbine comprising a compressor and a combustor and a system for detecting the current state of damage of a machine according to an embodiment of the invention.
- Figure 4: a schematic block diagram of a part of the combustor with parts of a system for detecting the current state of damage of a machine according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

### Detailed Description of the Embodiments

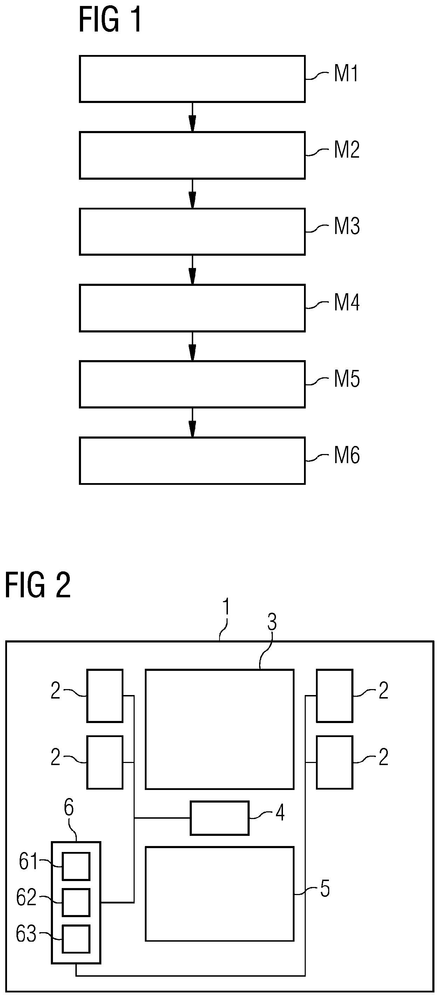

Figure 1 schematically shows a flow diagram of a method for detecting the current state of damage of a machine 1, 10 according to an embodiment of the invention. The flow diagram is segmented into six distinct method steps, labeled M1 through M6, which are executed sequentially.

Step M1 involves acquiring a plurality of first pressure signals from a plurality of first pressure sensors 2. Each of these first pressure sensors is arranged and configured to sense a pressure caused by a first process 3 of the machine 1, 10. It is understood that each of the plurality of first pressure sensors 2 is placed at different locations in the machine 1, 10 to obtain pressure signals, that may be caused by multiple first processes 3 in the machine 1, 10. This step ensures that multiple data points are collected to provide an understanding of the pressure variations caused by the first process 3.

Step M2 involves acquiring at least one second pressure signal from at least one second pressure sensor 4. This second pressure sensor 4 is arranged and configured to sense pressure caused by both the first process 3 and a second process 5 of the machine 1, 10. In preferred embodiments, a plurality of second sensors 4 placed at different locations in the machine 1, 10 is provided that outputs a plurality of second pressure signals. The acquisition of at least one second pressure signal allows for the differentiation between the effects of the first and second processes 3, 5 on the pressure profile of the machine 1, 10.

In step M3, the plurality of first pressure signals and the at least one second pressure signal, which exist in the time domain, are transformed into the frequency domain as discrete-time frequency spectra.

The generally optional step M4 involves averaging the plurality of transformed first pressure signals and the at least one transformed second pressure signal to obtain a first averaged pressure signal and a second averaged pressure signal. Averaging the signals helps in reducing noise and enhancing the signal quality, thereby providing a clearer representation of the pressure variations of the first and second process 5 of the machine 1, 10. In preferred embodiments, a plurality of second pressure signals is acquired and averaged to provide a second averaged pressure signal. In embodiments with only a single second pressure sensor 4, the second averaged pressure signal is identical to the second pressure signal.

In step M5, the first (averaged) pressure signal is subtracted from the (second) averaged pressure signal to obtain a subtracted pressure signal. This subtracted pressure signal provides an indication of the second process 5 of the machine 1, 10 by isolating the pressure variations attributable to the second process 5 from those caused by the first process 3.

In, step M6 the current status of the machine 1, 10 is determined based on a cepstrum analysis of the subtracted pressure signal. The cepstrum analysis is a signal processing technique that helps in identifying periodic structures in the frequency domain, which can be indicative of specific types of damage or wear in the machine 1, 10. This process is described in further detail in WO 2015090698 A1.

The above method thus provides a systematic approach to monitoring and diagnosing the health of a machine 1, 10 by leveraging pressure signals and advanced signal processing techniques.

Figure 2 shows a highly schematically block diagram of a machine 1 with an integrated system for detecting the current state of damage of the machine 1 according to an embodiment of the invention.

In this embodiment, the system is integrated in the machine 1 and comprises a plurality of first pressure sensors 2 arranged and configured such that these can sense a pressure caused by a first process 3 in the machine 1. In this embodiment, the system includes one second pressure sensor 4, which is arranged and configured to sense a pressure caused by the first process 3 and a second process 5 of the machine 1. In further embodiments, a plurality of second pressure sensors 4 are arranged to sense a pressure caused by the first process 3 and the second process 5 of the machine 1. These first pressure sensors 2 are strategically positioned at a location, where the first process 3 is conducted in the machine 1, to capture accurate corresponding pressure readings. The second pressure sensor 4 is arranged at locations, where a pressure caused by the first process 3 and the second process 5 can be captured.

The system further includes a data detection and processing apparatus 6 for detecting the first and second pressure signals. The data detection and processing apparatus 6 is connected to all the first pressure sensors 2 and the second pressure sensor 4. The data detection and processing apparatus 6 is responsible for receiving and processing the signals from the first and second pressure sensors 2 and 4. The data detection and processing apparatus 6 includes modules for transforming the pressure signals from the time domain to the frequency domain, averaging the transformed signals, subtracting the averaged signals, and performing cepstrum analysis to determine the current status of the machine 1. In this embodiment, a transformation 61 is configured to carry out a transformation of the first and second pressure signals from the time domain into the frequency domain as discrete-time frequency spectra, e.g. by a fast Fourier transform, FFT, a wavelet transform, or the like. A spectra processing unit 62 is configured subtract at least one of the plurality of first pressure signal from the at least one second pressure signal to obtain a subtracted pressure signal. In some embodiments, the spectra processing unit 62 is configured to subtract an equal number of first pressure signals from the same number of second pressure signals. In preferred embodiments, the spectra processing unit 62 is configured to average the plurality of first pressure signals and the at least one second pressure signal into an averaged first pressure signal and an averaged second pressure signal, and subtract the averaged first pressure signal from the averaged second pressure signal to obtain a subtracted pressure signal. A cepstrum analysis unit 63 configured to generate a cepstrum from the subtracted pressure signal for indicating the current status of damage of the machine 1.

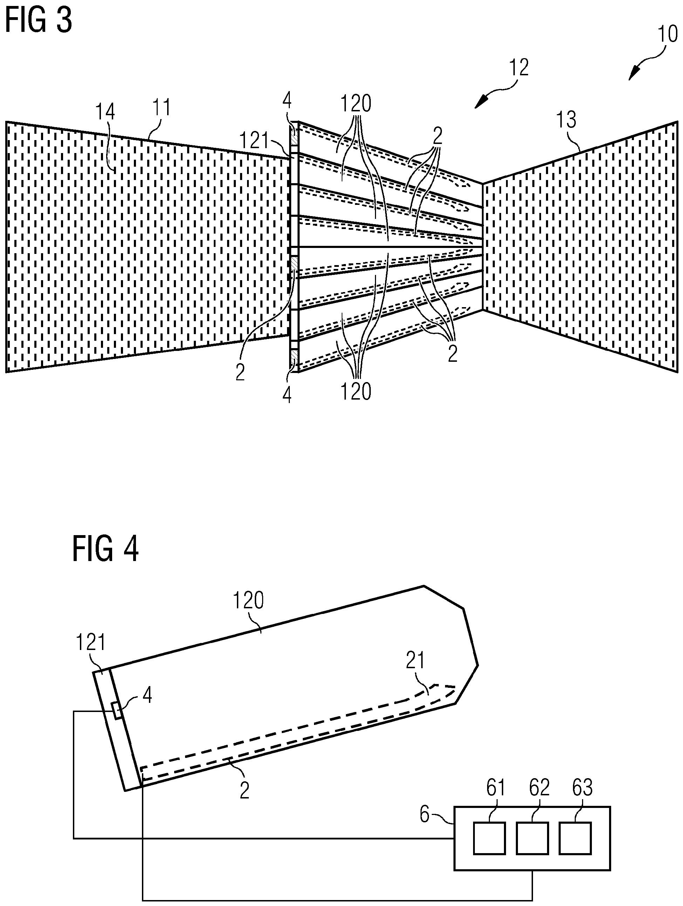

Figure 3 shows a schematic block diagram of a gas turbine 10 comprising a compressor 11, a combustor 12 and a system for detecting the current state of damage of a machine 1, 10 according to an embodiment of the invention. Fig. 3 provides a detailed view of a gas turbine 10, which is an embodiment of a gas turbine 10 as the machine 1, 10, in which the system is integrated. The gas turbine 10 comprises a compressor 11, a combustor 12 with a plurality of combustion chambers 120, and a turbine section 13. In preferred embodiments, combustor 12 includes 10, 12 or 16 combustion chambers 120 arranged around an extension of the compressor. As in usual turbines, an air stream enters the compressor 11, which compresses the air by heating by the combustor 12 to cause rotations in the turbine sections 13, which may be used to drive an electric motor to generate electricity.

Each combustor chamber 102 comprises a cover plate 121. In this embodiment, the first pressure sensors 2 are fixed to the cover plate 121 of the combustion chamber 120 to sense the pressure caused by the combustion process within the chamber. These first pressure sensors 2 are configured as J-tube pressure sensors 2 and are arranged to sense the pressure within the combustion chamber 120. In this embodiment, a J-tube pressure sensor 2 is placed in each combustion chamber 120 to sense pressure caused by the combustion process in the combustion chamber 120, thereby detecting combustion dynamics of the combustion process.

In this embodiment, an amount of three second pressure sensors 4 are configured as cover plate sensors 4 and are positioned on the cover plate 121. B this placement, the second pressure sensors 4 are capable to sense the pressure caused by both the combustion process and the blade rotations of the blades 14 in the compressor 11. In further embodiments, only one second pressure sensor 4 is positioned on only one of the cover plates 121 of the combustion chambers. In further embodiments, cover plate sensors 4 are placed on each cover plate 121 of each combustion chamber 120 of the combustor 12.

The system operates by acquiring a plurality of first pressure signals from the first pressure sensors 2 and second pressure signals from the second pressure sensors 4 over a time period. These signals exist in the time domain and are transformed into the frequency domain as discrete-time frequency spectra using a transformation device within the data detection and processing apparatus 6. Preferably, the transformed first pressure signals and the transformed second pressure signals are then averaged to obtain a first averaged pressure signal and a second averaged pressure signal, respectively. The first averaged pressure signal is then subtracted from the second averaged pressure signal to obtain a subtracted pressure signal, which provides an indication about the second process 3, i.e. the rotation of the blades 14 in the compressor 11 within the gas turbine 10.

The subtracted pressure signal undergoes cepstrum analysis to determine the current status of the gas turbine 10. The cepstrum analysis unit 63 within the data detection and processing apparatus 6 (both not shown in Fig. 3) generates a cepstrum from the subtracted pressure signal. This cepstrum is compared with a reference cepstrum obtained from an undamaged gas turbine 10 to assess the current health status of the gas turbine 10. The cepstrum analysis can provide a compressor condition index CCI by summing inversely Fourier transformed frequencies, which indicates the health status of the blades 14 of the compressor 11.

In summary, the figures illustrate a comprehensive system for monitoring the health of the gas turbine 10, more specifically the rotating blades in the compressor 11 by utilizing pressure sensors, signal processing, and cepstrum analysis to detect and evaluate the state of damage within the gas turbine 10.

Figure 4 shows a schematic block diagram of a part of the combustor 12 with parts of a system for detecting the current state of damage of a machine 1, 10 according to an embodiment of the invention. The part of the combustor 12 and all elements shown in Fig. 4 corresponds to the embodiment of the system shown in Fig. 3, where the machine 1. 10 is a gas turbine 10.

One of the combustion chambers 120, as these were indicated in Fig. 3, is depicted as an elongated structure, which is integral to the gas turbine's operation. The cover plate 121 is positioned at one end of the combustion chamber 120, serving as a mounting surface for various sensors, i.a. sensors 2, 4. The system comprises a plurality of first pressure sensors 2, of whom only one is shown in Fig. 4. The shown first pressure sensor 2 is attached to the cover plate 121. This first pressure sensor 2 is configured to sense the pressure caused by the combustion process within the combustion chamber 120. The first pressure sensor 2 is configured as a J-tube, which has a sensing part 21 arranged to sense the pressure of the combustion chamber 120. The sensing part 21 of the first pressure sensor 2 extends into the combustion chamber 120. This extension allows the first sensor 2 to directly measure the pressure within the combustion chamber 120, providing accurate and real-time data on the combustion process.

The system further comprises at least one second pressure sensor 4. The at least one second pressure sensor 4 is also mounted on the cover plate 121. This second sensor 4 is designed to sense pressures caused by both the combustion process and a secondary process, such as the blade rotations of blades 14 within the compressor 11 of the gas turbine 10.

The system further comprises and a data detection and processing apparatus 6. The data detection and processing apparatus 6 is connected to both the first pressure sensors 2 and the second pressure sensor 4. This apparatus 6 is responsible for acquiring the pressure signals from the sensors over a specified time period. The apparatus 6 includes several components for processing these signals.

Firstly, the apparatus 6 comprises a transformation 61, which transforms the time-domain pressure signals into the frequency domain as discrete-time frequency spectra, e.g. by a fast Fourier transform, FFT, a wavelet transform or the like. Secondly, the apparatus 6 includes a spectra processing unit 62. In some embodiments, this unit averages the transformed first pressure signals and the transformed second pressure signal to obtain averaged pressure signals. Subsequently, the spectra processing unit 62 subtracts the averaged first pressure signal from the averaged second pressure signal to obtain a subtracted pressure signal. This subtracted signal provides an indication of the secondary process, such as the blade rotations, by isolating its pressure contributions from those of the combustion process.

Furthermore, the apparatus 6 includes a cepstrum analysis unit 63, which generates a cepstrum from the subtracted pressure signal. The cepstrum analysis is used to determine the current status of the gas turbine 10 by identifying specific features and patterns in the signal that correlate with known states of damage or wear.

In summary, Figure 4 depicts a comprehensive system for monitoring the health of a gas turbine. The integration of multiple pressure sensors, along with advanced signal processing techniques, enables precise detection and analysis of the operational state of the gas turbine 10. The system is designed to provide real-time insights into the condition of the gas turbine 10, facilitating timely maintenance and ensuring optimal performance.

Although the present invention has been described above with reference to preferred embodiments, it is not limited thereto, and can be modified in a variety of ways. For example, the described method and system may be applicable to machines 1, 10 other than a gas turbine 10, e.g. involving combustion engines or other generators.

### List of Reference Signs

- 1: machine
- 2: first pressure sensor
- 3: first process
- 4: second pressure sensor
- 5: second process
- 6: data acquisition and processing apparatus
- 10: gas turbine (machine)
- 11: compressor
- 12: combustor
- 13: turbine section
- 14: blade
- 21: sensing part
- 61: transformation device
- 62: spectra processing unit
- 63: cepstrum analysis unit
- 120: combustion chamber
- 121: cover plate
- M1: acquiring first pressure signals
- M2: acquiring second pressure signals
- M3: transforming signals to frequency domain
- M4: averaging transformed signals
- M5: subtracting (averaged) signals
- M6: determining current status

## Claims

1. Method for detecting the current state of damage of a machine (1, 10), the method comprising:
acquiring (M1) a plurality of first pressure signals from a plurality of first pressure sensors (2), wherein each of the plurality of first pressure sensors (2) is arranged and configured to sense a pressure caused by a first process (3) of the machine (1, 10);
acquiring (M2) at least one second pressure signal from at least one second pressure sensor (4), wherein the at least one second pressure sensor (4) is arranged and configured to sense a pressure caused by the first process (3) of the machine and by a second process (5) of the machine (1, 10), and wherein the plurality of first pressure sensors (2) and the at least one second pressure sensor (4) detect a pressure of the machine to be monitored over a time period, wherein the plurality of first pressure signals and the at least one second pressure signal exist in a time domain;
transforming (M3) the plurality of first pressure signals and the at least one second pressure signal from the time domain into a frequency domain as discrete-time frequency spectra to achieve a plurality of transformed first pressure signals and at least one transformed second pressure signal;
subtracting (M5) at the least one of the plurality of first pressure signals from the at least one second pressure signal to obtain a subtracted pressure signal providing indication about the second process (4) of the machine (1, 10); and
determining (M6) the current status of the machine (1, 10) based on a cepstrum analysis of the subtracted pressure signal.

2. Method according to claim 1, further comprising averaging (M4) the plurality of transformed first pressure signals and the at least one transformed second pressure signal to obtain a first averaged pressure signal and a second averaged pressure signal,
wherein the first averaged pressure signal is subtracted (M5) from the second averaged pressure signal to obtain a subtracted pressure signal providing indication about the second process (4) of the machine (1, 10).

3. Method according to claim 1 or 2, wherein the machine (1, 10) includes a gas turbine (10) comprising a compressor (11) and a combustor (12) having at least one combustion chamber (120) .

4. Method according to claim 3, wherein the first process (3) includes a combustion in a combustion chamber (120), and wherein the second process (4) includes blade rotations of blades (14) in a compressor (11) of the gas turbine (10).

5. Method according to claim 4, wherein the plurality of first pressure sensors (2) includes a J-tube pressure sensor (2), which is fixed to the combustion chamber (120), wherein the J-tube sensor (2) has a sensing part (21) arranged to sense the pressure of the combustion chamber (120), and wherein the at least one second pressure sensor (4) is a cover plate pressure sensor (4), which is arranged on the cover plate (121) of the combustion chamber (120).

6. Method according to any of claims 3 to 5, wherein the cepstrum analysis provides a compressor condition index, CCI, value about a current health status of the compressor (11) by a summation of inversely Fourier transformed frequencies.

7. Method according to any of the precedent claims, wherein the cepstrum analysis includes:
determining actual cepstrum values based on the subtracted pressure signal, and
comparing the actual cepstrum values with a reference cepstrum values obtained from an undamaged machine.

8. Method according to claim 1, wherein a plurality of second pressure signals is acquired by a plurality of second pressure sensors (4).

9. System for detecting the current state of damage of a machine (1, 10), in particular by employing a method according to any of the claims 1 to 8, the system comprising:
a plurality of first pressure sensors (2) arranged and configured to sense a pressure caused by a first process (3) in the machine (1, 10),
at least one second pressure sensor (4) arranged and configured to sense a pressure cause by the first process (3) and by a second process (5) in the machine (1, 10), wherein the plurality of first pressure sensors (2) and the at least one second sensor (4) are configured to provide respective first and second pressure signals over a time period of the machine to be monitored, wherein the first and second pressure signals exist in the time domain,
a data detection and processing apparatus (6) for detecting the first and second pressure signals, wherein the data detection and processing apparatus (6) comprises a transformation device (61) for carrying out a transformation of the first and second pressure signals from the time domain into a frequency domain as discrete-time frequency spectra,
a spectra processing unit (62) configured to subtract at least one of the plurality of first pressure signals from the at least one second pressure signal to obtain a subtracted pressure signal, and
a cepstrum analysis unit (63) configured to generate a cepstrum from the subtracted pressure signal for indicating the current status of damage of the machine (1, 10).

10. System according to claim 9, wherein the spectra processing unit (62) is configured to average the plurality of transformed first pressure signals and the at least one transformed second pressure signal into an averaged first pressure signal and an averaged second pressure signal, and to subtract the averaged first pressure signal from the averaged second pressure signal to obtain a subtracted pressure signal.

11. System according to claim 9 or 10, wherein the cepstrum analysis unit is configured to generate an actual cepstrum from the subtracted pressure signal and to compare the actual cepstrum with a reference cepstrum obtained from an undamaged machine (1, 10).

12. Computer-readable storage medium storing program code, the program code comprising instructions that when executed by a processor carry out the method according to any of claims 1 to 9.
